# DEMANDE DE BREVET EUROPEEN

(11) **EP 1 035 006 A1**
(43) Date de publication de la demande: **13.09.2000**
(21) Numéro de dépôt: 00870033.8
(22) Date de dépôt: 06.03.2000
(51) Int. Cl.: B62D 35/00

(54) **Dispositif pour la réduction de la trainée aérodynamique d'un véhicule terrestre**

(30) Priorité: 05.03.1999 BE 9900159
(71) Demandeur: Bury, Lambert M., 1050 Bruxelles (BE)
(72) Inventeur: Bury, Lambert M., 1050 Bruxelles (BE)
(74) Mandataire: De Vleeschauwer, Natalie

(57) **Abrégé**

Véhicule terrestre monté sur roues, pourvu en dessous de la face inférieure 3 de la carrosserie d'un ou plusieurs conduit(s) d'air 7 présentant une ou plusieurs ouverture(s) d'entrée 8 dirigée(s) vers l'avant du véhicule et une ou plusieurs ouverture(s) de sortie 9 située(s) à proximité de sa face postérieure 4 de manière telle que, lors de l'avance du véhicule, de l'air soit capté par la ou les ouverture(s) d'entrée, dirigé par le ou les conduit(s) 7 et refoulé par la ou les ouverture(s) de sortie 9 derrière et à proximité de la face postérieure 4 du véhicule, le ou les conduit(s) d'air 7 étant évasé(s) vers la ou les ouverture(s) de sortie 9 et étant conformé(s) de manière à infléchir vers le haut l'air refoulé par cette ou ces ouvertures(s) de sortie 9.

## Description

La présente invention a pour objet un dispositif apte à réduire la traînée aérodynamique d'un véhicule terrestre. L'invention a également pour objet un véhicule terrestre pourvu d'un tel dispositif.

Il est bien connu que la résistance aérodynamique d'un véhicule dépend non seulement de ses dimensions mais également de sa forme. Dans la conception des formes des véhicules, des efforts considérables ont dès lors été faits pour réduire cette résistance aérodynamique.

Ceci est vrai plus généralement en ce qui concerne les voitures particulières dont les formes (et en particulier la forme de la carrosserie) sont conçues pour favoriser un écoulement laminaire, sans turbulence, de l'air dans lequel elles se déplacent.

Dans la construction des véhicules utilitaires tels que les camions, on a également cherché à améliorer la pénétration dans l'air, notamment par des formes mieux étudiées de la partie avant du camion ou par l'adjonction de déflecteurs portés par le toit de la cabine du chauffeur et dirigés vers le bord supérieur avant du fourgon.

Pour beaucoup de camions, le fourgon (ou la benne) a toutefois des formes très peu aérodynamiques. Ceci est dû, en majeure partie, au fait que dans la réalisation de ces fourgons ou bennes, la première préoccupation concerne bien souvent leur volume de chargement.

On peut constater ceci notamment et plus particulièrement en ce qui concerne les véhicules dits "maxi-codes", c'est-à-dire les camions qui par leur conception utilisent tout le volume que leur autorise les réglementations et en particulier le code de la route.

Les formes anguleuses de tels véhicules provoquent, outre des turbulences, une dépression importante à l'arrière du véhicule en marche. On remarquera d'ailleurs que la face arrière de tels camions se présente généralement comme une grande surface rectangulaire en substance plane.

De tels véhicules ont un Cx (coefficient des formes aérodynamiques) élevé et la résistance de l'air à l'avancement de ces véhicules est donc important, ce qui influence défavorablement leur vitesse et leur consommation de carburant.

Le document US-A-1,923,349 décrit un véhicule automobile muni, près de sa partie arrière, d'un conduit présentant une ouverture d'entrée située sous le plancher du véhicule et une ouverture de sortie située en substance au milieu de la face arrière du véhicule. Ce conduit qui a une section en substance rectangulaire (la plus grande dimension de ce rectangle étant orientée dans une direction transversale au véhicule), se rétrécit depuis son ouverture d'entrée jusqu'à son ouverture de sortie. Ce conduit est présenté comme pouvant augmenter la pression de l'air à l'arrière du véhicule (lorsque celui-ci se déplace vers l'avant) et permettant ainsi d'atteindre une plus grande vitesse du véhicule pour une même dépense d'énergie.

Le document US-A-3,591,229 décrit un système assez semblable à celui décrit dans US-A-1,923,345 mais le jet d'air sortant par l'ouverture de sortie du conduit est destiné à empêcher ou réduire le salissement des feux arrière du véhicule.

Le document GB-A-2 068 851 décrit un dispositif destiné à réduire la résistance à l'avancement d'un véhicule tel qu'un camion. Ce dispositif consiste essentiellement en un conduit qui s'étend depuis une ouverture d'entrée située à l'avant du véhicule jusqu'à une ouverture de sortie située derrière la face arrière de celui-ci, et qui enveloppe notamment le radiateur et le moteur, ainsi que le tuyau et le pot d'échappement.

On a donc, à plusieurs reprises, proposé des systèmes tendant à réduire la résistance à l'avancement de véhicules, en injectant de l'air dans la zone dépressionnaire qui se forme à l'arrière d'un véhicule en marche, cet air étant conduit vers cette zone dépressionnaire par un conduit dont l'ouverture d'entrée est située plus vers l'avant de ce véhicule.

Comme la réduction de la consommation de combustible qui devrait permettre de tels systèmes constituerait un avantage non négligeable, on peut s'étonner du fait que ces systèmes ne se sont pas imposés et ne sont pas couramment utilisés.

Des études approfondies effectuées dans la cadre de la présente invention ont permis de déterminer que les systèmes proposés jusqu'à présent manquent d'efficacité et que leur rendement (économie d'énergie) est quelquefois négatif.

Il apparaît que le manque d'efficacité des systèmes connus est notamment dû au fait que le conduit d'air se rétrécit depuis son ouverture d'entrée jusqu'à son ouverture de sortie. On peut comprendre qu'en conformant ainsi ce conduit d'air on cherchait à faciliter l'accès de l'air dans l'ouverture d'entrée du conduit, à accélérer la vitesse du flux d'air depuis l'ouverture d'entrée jusqu'à l'ouverture de sortie et à refouler ainsi cet air plus efficacement dans la zone dépressionnaire à l'arrière du véhicule.

Or, les études qui ont été effectuées ont montré qu'une telle conformation du conduit d'air est précisément défavorable à l'efficacité du système et qu'il est, par contre, avantageux que l'énergie cinétique du flux d'air sortant dudit conduit soit faible.

La présente invention a pour but de réduire de manière substantielle les inconvénients des systèmes connus et de diminuer de manière sensible la valeur de la dépression à l'arrière du véhicule en marche.

L'invention peut être appliquée à des véhicules terrestres très divers, aussi bien des véhicules sur rails que des véhicules routiers. L'invention a cependant été conçue plus spécialement pour des véhicules routiers de grandes dimensions tels que des camions, remorques ou autocars et dans la description détaillée de l'invention, on se référera de manière non limitative à un tel véhicule routier.

L'invention a pour objet un véhicule terrestre monté sur roues, comportant une carrosserie formant une enceinte pour le transport de personnes ou de choses, cette carrosserie présentant une face inférieure ou plancher et une face postérieure située à l'opposé de la direction normale de déplacement du véhicule. C'est à l'arrière de cette face postérieure que le déplacement du véhicule vers l'avant provoque la formation d'une zone dépressionnaire. Ce véhicule suivant l'invention est pourvu en dessous de la carrosserie d'un ou plusieurs conduit(s) d'air présentant une ou plusieurs ouverture(s) d'entrée dirigée(s) vers l'avant du véhicule et une ou plusieurs ouverture(s) de sortie située(s) à proximité de la face postérieure de la carrosserie, le ou les conduits d'air étant conçu(s) de manière telle que lors du déplacement du véhicule vers l'avant, de l'air est capté par la ou les ouverture(s) d'entrée, dirigé par le ou les conduit(s) et refoulé par la ou les ouverture(s) de sortie dans ladite zone dépressionnaire, à proximité de la face postérieure de la carrosserie.

Le terme "carrosserie" dont il est question ici doit être compris dans son sens très large. Dans le cas d'un autocar ou autobus, il s'agit évidemment de la carrosserie vitrée du véhicule. Dans le cas de remorques ou camions-fourgons, la carrosserie peut consister en une caisse dont toutes les parois sont formées de tôle ou dont une ou plusieurs faces (faces latérales, face supérieure et/ou face postérieure) sont bâchées. Dans tous ces cas, les termes "face postérieure de la carrosserie" désignent la face postérieure du véhicule. Dans le cas d'une semi-remorque ou d'une remorque chargée d'un ou plusieurs conteneurs, les termes "face postérieure de la carrosserie" désignent la paroi du conteneur qui est situé à l'arrière du véhicule.

Le véhicule suivant l'invention comporte un élément, situé sous la face inférieure de la carrosserie et s'étendant au moins sur la majeure partie de la largeur du véhicule, la ou les ouverture(s) d'entrée du ou des conduit(s) d'air étant avantageusement située(s) à proximité de la partie arrière dudit élément, à un niveau plus bas que la partie inférieure de celui-ci, le ou les conduit(s) d'air étant évasé(s) vers la ou les ouvertures(s) de sortie et étant conformé(s) de manière à infléchir vers le haut l'air refoulé par cette ou ces ouverture(s) de sortie.

L'élément (situé sous la face inférieure de la carrosserie) dont il est question ici peut notamment consister en un ou plusieurs essieux arrière du véhicule.

De manière préférée, le ou les conduit(s) d'air présente(nt) une section oblongue, plus large que haute.

Suivant une forme d'exécution particulière, la section du ou des conduit(s) d'air est en substance rectangulaire, la plus grande dimension du rectangle étant orientée horizontalement, perpendiculairement par rapport à la direction d'avancement du véhicule.

Comme indiqué plus haut, le ou les conduit(s) d'air est(sont) évasé(s) vers la ou les ouverture(s) de sortie. L'agrandissement de la section du ou des conduit(s) est avantageusement progressive et régulière depuis l'ouverture d'entrée jusqu'à l'ouverture de sortie. En outre, comme le ou les conduit(s) d'air présente(nt) de préférence, une section oblongue, cet agrandissement concerne aussi bien la plus grande que la plus petite dimension de cette section.

La forme d'exécution la plus simple du dispositif suivant l'invention est celle ou ce dispositif qui comprend un seul conduit d'air présentant une ouverture d'entrée et une ouverture de sortie.

Compte tenu de la forme et des éléments constitutifs du véhicule (par exemple, les longerons du châssis d'un camion ou d'une semi-remorque), il peut cependant être plus avantageux de choisir une autre conformation du dispositif comme, à titre d'exemples :
- un dispositif comprenant deux ou plusieurs conduits d'air présentant chacun une ouverture d'entrée et une ouverture de sortie;
- un dispositif comprenant un conduit à embranchement présentant une ouverture d'entrée et aboutissant à deux ou plusieurs ouvertures de sortie; ou
- un dispositif dans lequel deux ou plusieurs conduits présentant chacun une ouverture d'entrée se rejoignent et aboutissent à une ouverture de sortie.

Suivant une forme d'exécution avantageuse, le véhicule est en outre pourvu d'un déflecteur d'air monté sous la carrosserie, en avant dudit élément, ce déflecteur présentant une face inclinée vers le bas de l'avant vers l'arrière, en dirigeant ainsi de l'air sous ledit élément, vers la ou les ouverture(s) d'entrée du ou des conduit(s) d'air, lorsque le véhicule se déplace vers l'avant. Ce déflecteur d'air peut notamment consister en une tôle. Un tel déflecteur améliore également la pénétration du véhicule dans l'air en ce qu'il profile l'écran que présentent les essieux et leurs accessoires.

Des panneaux latéraux, disposés en substance verticalement, peuvent en outre être montés latéralement de part et d'autre dudit déflecteur d'air, ces panneaux latéraux contribuant ainsi à diriger de l'air vers la ou les ouverture(s) d'entrée du ou des conduit(s) d'air.

Ces panneaux latéraux peuvent éventuellement se prolonger sous ledit élément, au moins jusqu'à la partie arrière de celui-ci.

Pour améliorer encore le guidage de l'air vers l'ouverture d'entrée du ou des conduits d'air, un panneau supplémentaire amovible (tel qu'une tôle) peut être monté sous ledit élément entre le bord inférieur (arrière) du déflecteur d'air et la partie supérieure du ou des conduits d'air (près de leur ouverture d'entrée).

L'invention a également pour objet un dispositif apte à réduire la traînée aérodynamique d'un véhicule terrestre monté sur roues, comportant une carrosserie formant une enceinte pour le transport de personnes ou de choses, cette carrosserie présentant une face inférieure ou plancher et une face postérieure située à l'opposé de la direction de déplacement normale du véhicule, face postérieure à l'arrière de laquelle le déplacement du véhicule vers l'avant provoque la formation d'une zone dépressionnaire. Ce dispositif comporte un ou plusieurs conduit(s) d'air pourvu(s) d'une ou plusieurs ouverture(s) d'entrée et d'une ou plusieurs ouverture(s) de sortie. Ce dispositif est muni de moyens pour le fixer sous la face inférieure de la carrosserie, de manière telle que la ou les ouverture(s) d'entrée du ou des conduit(s) d'air est(sont) dirigée(s) vers l'avant du véhicule et la ou les ouverture(s) de sortie est(sont) située(s) à proximité de la face postérieure de la carrosserie, le ou les conduit(s) d'air étant conçu(s) de manière telle que lors du déplacement du véhicule vers l'avant, de l'air est capté par la ou les ouverture(s) d'entrée, dirigé par le ou les conduit(s) et refoulé par la ou les ouverture(s) de sortie dans ladite zone dépressionnaire, à proximité de la face postérieure de la carrosserie.

Dans le dispositif suivant l'invention, le ou les conduit(s) d'air est(sont) évasé(s) vers la ou les ouverture(s) de sortie et est(sont) conformé(s) de manière à infléchir vers le haut l'air refoulé par cette ou ces ouverture(s) de sortie.

Le ou les conduit(s) d'air est(sont) avantageusement formé(s) ou extérieurement enrobé(s) d'une matière résistant aux chocs. En particulier, les conduits d'air peuvent être faits en métal. Suivant une forme d'exécution particulière, le ou les conduits d'air sont extérieurement enrobés d'une matière plastique.

Suivant une forme d'exécution particulière, le dispositif comporte un panneau qui est solidarisé avec le ou les conduit(s) d'air à proximité de leur(s) ouverture(s) de sortie. Ce panneau comporte des moyens pour le fixer dans un plan sensiblement vertical sous la face postérieure de la carrosserie. Ce panneau peut être pourvu d'un ou plusieurs éléments choisis parmi le groupe comprenant :
- des moyens de fixations pour feux de signalisation et/ou feux de position,
- des feux de signalisation et/ou des feux de position,
- des moyens pour la fixation d'une plaque telle qu'une plaque d'immatriculation,
- le pare-chocs arrière du véhicule.

Dans le dispositif et le véhicule suivant l'invention, le pare-chocs arrière du véhicule est avantageusement profilé (profil en S) de manière à éviter le décollement de la veine d'air passant sous le véhicule et en la guidant également vers le haut.

D'autres particularités et avantages de l'invention ressortiront de la description d'une forme d'exécution particulière de l'invention, donnée à titre d'exemple non limitatif, référence étant faite aux dessins annexés dans lesquels
- la figure 1 est une vue schématique latérale d'un véhicule suivant l'invention;
- la figure 2 est une vue de la face arrière du véhicule
- la figure 3 est une vue schématique latérale, à plus grande échelle, d'un dispositif suivant l'invention.

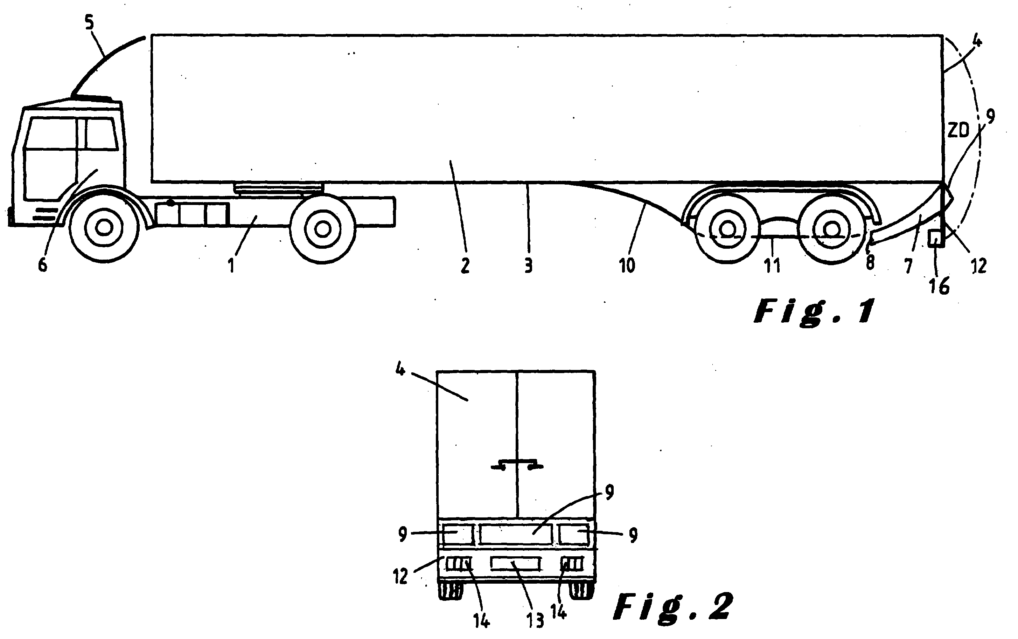

Le véhicule montré aux figures 1 et 2 est un camion semi-remorque comportant le tracteur 1 et le fourgon 2. La carrosserie du fourgon 2 se présente comme un parallélépipède rectangle ayant une face inférieure 3 et une face postérieure 4.

De manière connue, un déflecteur d'air 5 est monté sur le toit de la cabine de conduite 6 du tracteur 1. Ce déflecteur 5 qui est dirigé vers le bord supérieur avant du fourgon 2 améliore la pénétration dans l'air du véhicule.

Lorsque le véhicule se déplace vers l'avant, une zone dépressionnaire ZD se forme derrière la face postérieure 4 du fourgon 2. L'importance de celle dépression d'air, qui freine l'avance du véhicule, dépend évidemment de la vitesse de celui-ci.

Afin de réduire l'importance de la dépression d'air dans la zone ZD, le véhicule est équipé d'un dispositif conforme à l'invention. Ce dispositif comporte un système de conduits d'air 7 présentant une ouverture d'entrée 8 de section oblongue, plus large que haute, cette ouverture 8 étant dirigée vers l'avant du véhicule. Le conduit d'air 7 partant de cette ouverture d'entrée 8, se divise en trois branches aboutissant respectivement à trois ouvertures de sortie 9 situées à proximité de la face postérieure 4 du véhicule.

L'ouverture d'entrée 8 du système de conduits 7 est située à un niveau plus bas que les essieux du fourgon 2, à proximité de l'essieu arrière.

Dans son ensemble, le système de conduits d'air 7 est évasé, aussi bien latéralement qu'en hauteur, depuis l'ouverture d'entrée 8 jusqu'aux ouvertures de sortie 9.

Un déflecteur d'air 10 est monté sous la carrosserie du fourgon 2, en avant des essieux. Ce déflecteur d'air 10, formé d'une tôle, est incliné vers le bas, de l'avant vers l'arrière et dirige ainsi de l'air sous les essieux du fourgon 2 lorsque le véhicule se déplace vers l'avant.

Des panneaux latéraux (non représentés), disposés en substance verticalement, sont montés latéralement de part et d'autre du déflecteur d'air 10. Ces panneaux latéraux qui se prolongent sous les essieux, au moins jusqu'à proximité de l'essieu arrière, contribuent à diriger de l'air vers les ouvertures d'entrée 8 des conduits d'air 7.

Pour améliorer encore le guidage de l'air vers ces ouvertures d'entrée 8, un panneau supplémentaire 11 est monté de manière amovible sous les essieux du fourgon 2, entre le bord inférieur (arrière) du déflecteur d'air 10 et la partie supérieure du conduit d'air 7 (près de l'ouverture d'entrée 8).

La partie arrière du système de conduits d'air 7 est fixée dans un panneau 12 qui est fixé verticalement sous la face arrière 4 du fourgon 2, sensiblement dans le prolongement de celle-ci. Sur ce panneau 12 sont fixés la plaque d'immatriculation 13 du véhicule et des feux de signalisation et de position 14.

Pour que l'invention exerce au maximum ses avantages, le dispositif suivant l'invention peut être fait sur mesure, spécifiquement pour le véhicule sur lequel il sera monté.

Les dimensions et la forme optimales du ou des conduits d'air dépendent notamment de la forme externe et donc du comportement aérodynamique intrinsèque du véhicule.

Afin d'optimiser le dispositif suivant l'invention pour un véhicule spécifique, on peut faire appel à des logiciels spécifiquement développés pour calculer la traînée aérodynamique d'objets de formes les plus diverses. De tels logiciels sont connus par l'homme du métier. On peut également faire appel à des tests en tunnel aérodynamique. Les meilleurs résultats sont obtenus en combinant des résultats obtenus par ordinateur avec ceux obtenus au moyen d'essais pratiques.

La vitesse normale du véhicule doit également être prise en considération.

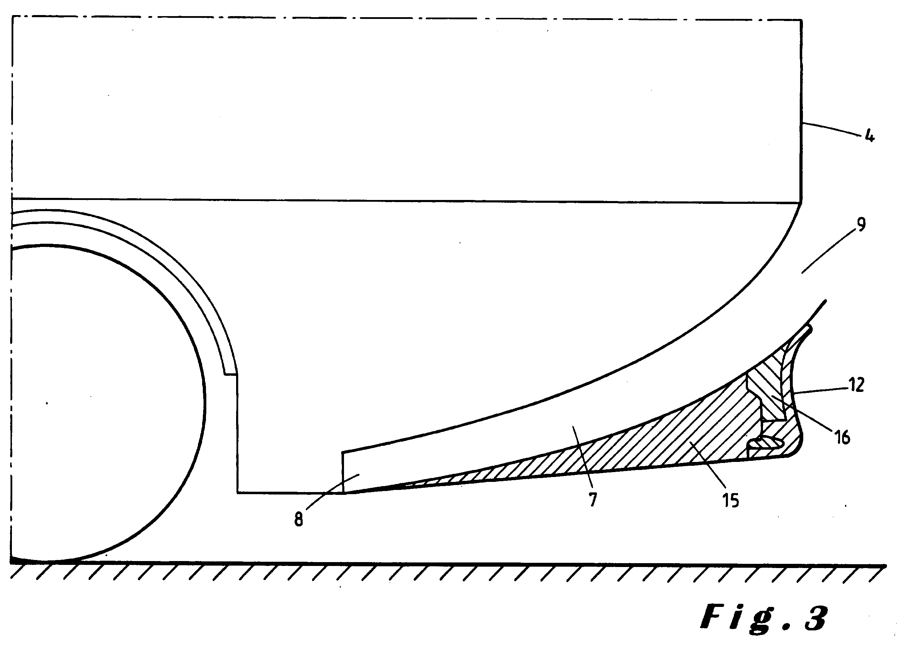

La figure 3 est une vue schématique latérale, à plus grande échelle, d'un dispositif suivant l'invention.

Outre les éléments déjà cités et commentés plus haut, cette figure 3 montre un élément 15, consistant en une masse de matière polymère (polypropylène expansé) qui enrobe le pare-chocs arrière 16 du véhicule et dont la face supérieure épouse la forme de la partie inférieure du système de conduits d'air 7. La face inférieure de l'élément 13 est sensiblement plane. La partie arrière de l'élément 15 est profilée de manière assez particulière, la forme de cet élément 15 ayant été calculée et testée pour réduire sensiblement les turbulences du flux d'air qui, lors de leur mouvement du véhicule vers l'avant, passe sous le pare-chocs 16 du véhicule.

## Revendications

1. Véhicule terrestre monté sur roues comportant une carrosserie formant une enceinte pour le transport de personnes ou de choses, cette carrosserie présentant une face inférieure (3) ou plancher et une face postérieure (4) située à l'opposé de la direction de déplacement normale du véhicule, face postérieure à l'arrière de laquelle le déplacement du véhicule vers l'avant provoque la formation d'une zone dépressionnaire (ZD), ce véhicule étant pourvu en dessous de la carrosserie d'un ou plusieurs conduit(s) d'air (7) présentant une ou plusieurs ouverture(s) d'entrée (8) dirigée(s) vers l'avant du véhicule et une ou plusieurs ouverture(s) de sortie (9) située(s) à proximité de la face postérieure (4) de la carrosserie, le ou les conduit(s) d'air (7) étant conçu(s) de manière telle que lors du déplacement du véhicule vers l'avant, de l'air est capté par la ou les ouverture(s) d'entrée (8), dirigé par le ou les conduit(s) (7) et refoulé par la ou les ouverture(s) de sortie (9) dans ladite zone dépressionnaire (ZD), à proximité de la face postérieure (4) de la carrosserie,
caractérisé en ce qu'il comporte un élément, situé sous la face inférieure (3) de la carrosserie et s'étendant au moins sur la majeure partie de la largeur du véhicule, la ou les ouverture(s) d'entrée (8) du ou des conduit(s) d'air (7) étant située(s) à proximité de la partie arrière dudit élément; à un niveau plus bas que la partie inférieure de celui-ci, le ou les conduit(s) d'air (8) étant évasé(s) vers la ou les ouverture(s) de sortie (9, et étant conformé(s) de manière à infléchir vers le haut l'air refoulé par cette ou ces ouverture(s) de sortie (9).

2. Véhicule suivant la revendication 1, caractérisé en ce que ledit élément situé sous la face inférieure de la carrosserie, consiste en un ou plusieurs essieux arrière du véhicule.

3. Véhicule suivant l'une quelconque des revendications 1 et 2, caractérisé en ce qu'il est pourvu d'un déflecteur d'air (10) monté sous la carrosserie, en avant dudit élément, ledit déflecteur (10) présentant une face inclinée vers le bas, de l'avant vers l'arrière, et dirigeant ainsi de l'air sous ledit élément, vers la ou les ouverture(s) d'entrée (8) du ou des conduit(s) d'air (7), lorsque le véhicule se déplace vers l'avant.

4. Véhicule suivant la revendication 3, caractérisé en ce que ledit déflecteur d'air (10) consiste en une tôle.

5. Véhicule suivant l'une quelconque des revendications 3 et 4, caractérisé en ce qu'il comporte en outre des panneaux latéraux disposés en substance verticalement et montés latéralement de part et d'autre dudit déflecteur d'air (10), ces panneaux latéraux contribuant ainsi à diriger de l'air vers la ou les ouverture(s)d'entrée (8) du ou des conduit(s) d'air (7).

6. Véhicule suivant la revendication 5, caractérisé en ce que lesdits panneaux latéraux se prolongent sous ledit élément jusqu'à proximité de la partie arrière de celui-ci.

7. Dispositif apte à réduire la traînée aérodynamique d'un véhicule terrestre monté sur roues, comportant une carrosserie formant une enceinte pour le transport de personnes ou de choses, cette carrosserie présentant une face inférieure (3) ou plancher et une face postérieure (4) située à l'opposé de la direction de déplacement normal du véhicule, face postérieure à l'arrière de laquelle le déplacement du véhicule vers l'avant provoque la formation d'une zone dépressionnaire (ZD), ce dispositif comportant un ou plusieurs conduit(s) d'air (7) pourvu(s) d'une ou plusieurs ouverture(s) d'entrée (8) et d'une ou plusieurs ouverture(s) de sortie (9), et étant muni de moyens pour le fixer sous la face inférieure (3) de la carrosserie de manière telle que la ou les ouverture(s) d'entrée (8) du ou des conduit(s) d'air (7) est(sont) dirigée(s) vers l'avant du véhicule et la ou les ouverture(s) de sortie (9) est(sont) située(s) à proximité de la face postérieure (4) de la carrosserie, le ou les conduit(s) d'air (7) étant conçu(s) de manière telle que lors du déplacement du véhicule vers l'avant, de l'air est capté par la ou les ouverture(s) d'entrée (8), dirigé par le ou les conduit(s) (7) et refoulé par la ou les ouverture(s) de sortie (9) dans ladite zone dépressionnaire ZD, à proximité de la face postérieure (4) de la carrosserie,
caractérisé on ce que le ou les conduit(s) d'air (7) est(sont) évasé(s) vers la ou les ouverture(s) de sortie (9) et est(sont) conformé(s) de manière à infléchir vers le haut l'air refoulé par cette ou ces ouverture(s) de sortie (9).

8. Dispositif suivant la revendication7, caractérisé en ce que le ou les conduit(s) d'air (7) est(sont) formé(s) ou extérieurement enrobé(s) d'une matière résistant aux chocs.

9. Dispositif suivant l'une ou l'autre des revendications 7 et 8, caractérisé on ce que le ou les conduit(s) d'air (7) est(sont) on métal.

10. Dispositif suivant l'une ou l'autre des revendications 7 à 9, caractérisé on ce que le ou les conduit(s) d'air (7) est(sont) extérieurement enrobé(s) d'une matière plastique.

11. Dispositif suivant l'une ou l'autre des revendications 7 à 10, caractérisé on qu'il est pourvu d'un élément choisi parmi le groupe comprenant
- moyens de fixation pour feux de signalisation et/ou feux de position,
- feux de signalisation et/ou feux de position (14),
- moyens pour la fixation d'une plaque telle qu'une plaque d'immatriculation (13),
- le pare-chocs arrière
- ou une combinaison de deux ou plusieurs de ces éléments.
